# EUROPÄISCHE PATENTSCHRIFT

(11) **EP 0 851 348 B1**
(45) Veröffentlichungstag und Bekanntmachung des Hinweises auf die Patenterteilung: **22.12.1999**
(21) Anmeldenummer: 97120393.0
(22) Anmeldetag: 20.11.1997
(51) Int. Cl.: G06F 9/46

(54) **Verfahren und Vorrichtung zum Implementieren eines echtzeitfähigen Steuerprogramms in einem nicht-echtzeitfähigen Betriebsprogramm**
Method and device for implementing a realtime control program in a non realtime control program
Méthode et appareil pour implémentation d'un logiciel de contrôle en temps réel dans un logiciel de contrôle en temps non réel

(30) Priorität: 22.11.1996 DE 19648422
(43) Veröffentlichungstag der Anmeldung: 01.07.1998
(73) Patentinhaber: Beckhoff, Hans, 33415 Verl (DE)
(72) Erfinder: Beckhoff, Hans, 33415 Verl (DE)
(74) Vertreter: Wilhelm, Jürgen, Dipl.-Phys.

(56) Entgegenhaltungen:
- EP-A- 0 400 500
- FR-A- 2 651 051
- WROBEL M: "WINDOWS WINDUSTRIETAUGLICH AUFRUSTEN" ELEKTRONIK, Bd. 42, Nr. 17, 24.August 1993, Seiten 95-100, XP000387672
- STEINMETZ R: "ANALYZING THE MULTIMEDIA OPERATING SYSTEM" IEEE MULTIMEDIA, Bd. 2, Nr. 1, 21.März 1995, Seiten 68-84, XP000500087

## Beschreibung

Die Erfindung betrifft ein Verfahren zum Implementieren eines echtzeitfähigen Steuerprogramms in einem nicht-echtzeitfähigen Betriebsprogramm sowie eine Vorrichtung zur Durchführung eines solchen Verfahrens.

Bei der Automatisierung von Maschinen und Produktionsanlagen werden zur Steuerung zunehmend Personalcomputer (PC) eingesetzt. Der wesentliche Vorteil von PC-gestützten Steuerungssystemen gegenüber herkömmlichen speicherprogrammierbaren Steuerungslösungen (SPS/CNC) besteht in der Möglichkeit allgemein gültige Rechnerstandards, die durch internationale Normen und durch vielfach erfolgreichen Einsatz am Markt vorgegeben werden, einsetzen zu können. Hierdurch wird einerseits eine kostengünstige Steuerungslösung erreicht und andererseits gleichzeitig der Einsatz modernster Technik durch die kurzen Innovationszyklen bei der PC-Entwicklung gewährleistet.

Als ein erster Ansatz zur Verwendung von PCs in Automatisierungssystemen wurden spezielle PC-Baugruppen in bestehende SPS/CNC-Steuerungssysteme integriert. Der Einsatz zusätzlicher externer PCs, insbesondere zur Visualisierung und Protokollierung des Steuerungsvorgangs, macht solche Steuerungssysteme jedoch aufwendig und teuer.

Als wesentlich vielversprechenderer Lösungsansatz für die Verwendung von PCs zu Steuerungsaufgaben hat sich deshalb die Integration der SPS/CNC-Funktionen in den PCs selbst herauskristallisiert. Die extrem schnelle und kontinuierliche Leistungssteigerung der PC-Prozessoren in den letzten Jahren hat es nämlich möglich gemacht, gleichzeitig steuerungstechnische Aufgaben im Echtzeitbetrieb, d.h. die Verarbeitung von Informationen zum gleichen Zeitpunkt mit der gleichen Geschwindigkeit, mit der diese anfallen, und klassische PC-Funktionen mittels eines einzigen Prozessors zu bewältigen. Dieser Lösungsansatz hat nicht nur unter Kostengesichtspunkten Vorteile, sondern bietet auch eine höhere Flexibilität bei der Anpassung der Steuerung an gewünschte Applikationen.

Um eine Echtzeit-Steuerung mittels eines PC auszuführen zu können, muß dieser allen auftretenden Aufgaben ausreichende Rechenleistung zur Verfügung stellen und damit eine stabile Prozeßkontrolle ermöglichen. Genauer muß der PC ein zyklisches Bearbeiten einer Steuerungsaufgabe ohne zeitliche Schwankungen, d.h. mit einem Jitter im Bereich von wenigen Microsekunden, mit einer vorhersehbaren Latenzzeit, d.h. Antwort zeit der Steuerung auf eine Regelungsanforderung, gewährleisten.

Im Idealfall muß auf dem PC kein zusätzliches Betriebssystem für Echtzeitaufgaben implementiert werden, sondern das zur Ausübung der üblichen PC-Funktionen implementierte Betriebssystem leistet die Echtzeitsteuerung gleich mit. Jedoch genügen nahezu alle bisher bekannten Betriebssysteme nicht den obengenannten Echtzeitanforderungen. Dies gilt vor allem für die Standardbetriebssysteme für PCs der Firma Microsoft. Insbesondere die Windows-Betriebssysteme eignen sich nur sehr unzureichend für zeitkritische Steueraufgaben, da unter diesen Betriebssystemen auftretende Unterbrechungsanforderungen, d.h. Interrupts, nicht direkt auf dem PC-Prozessor Zugriff haben. Wenn unter den Windows-Betriebssystemen eine Steuerungsaufgabe durch den PC-Prozessor ausgeführt werden soll, übernimmt ein virtueller Maschinenmanager nach dem Interrupt-Anruf die Zuordnung der Prozessor-Ressourcen. Diese zwischengeschaltete Virtualisierung erhöht jedoch die Latenzzeit wesentlich, insbesondere dann, wenn bei Eintreffen höher priorisierter Interrupts die Durchführung der früheren Interrupt-Aufforderung unterbrochen werden muß. Weiterhin ist unter den Windows-Betriebssystemen auch die Konstanz der Latenzzeit, die wesentlich für Steuerungsaufgaben ist, nicht gewährleistet, weil die Betriebssysteme je nach Art des Interrupt-Aufrufs unterschiedlich schnell reagieren. Da jedoch die Windows-Betriebssysteme diejenigen Plattformen für PCs mit dem größten Applications-Softwareangebot sind, wäre es insbesondere wünschenswert, Echtzeitaufgaben unter diesen Betriebssystemen durchführen zu können.

Zur Lösung des Problems nicht-echtzeitfähiger Betriebssysteme wird in der DE 44 06 094 A1 vorgeschlagen, die Echtzeit aus führung eines Steuerprogramms dadurch zu gewährleisten, daß durch direkten Zugriff auf den nicht maskierbaren Interrupt (NMI) des Prozessors ein kompletter Umgebungswechsel vom nicht-echtzeitfähigen Betriebssystem auf das echtzeitfähige Steuerungsprogramm durchgeführt wird. Dieser Umgebungswechsel über den nicht-maskierbaren Interrupt macht jedoch eine Zusatz-Hardware für das PC-System erforderlich, mit der die Aufrufe des nicht-maskierten Interrupts erzeugt werden können. Weiterhin besitzt das in der DE 44 06 094 A1 vorgeschlagene Verfahren beim Zugriff über das nicht-maskierbare Interrupt keine Kenntnis vom augenblicklichen Zustand des Betriebssystems, so daß dieses auch an kritischen Code-Abschnitten, die ohne Unterbrechung bearbeitet werden müssen, angehalten wird, was zu Instabilitäten im Betriebssystem führen kann. Dies gilt insbesondere bei Verwendung des Verfahrens gemäß DE 44 06 094 A1, bei dem für die Unterstützung komplexer Automatierungsaufgaben besonders geeigneten Betriebssystem Windows NT. Bei diesem Betriebssystem ist der nicht-maskierbare Interrupt für "fatale" Hardwarefehler des Prozessors vorgesehen. Bei Aufruf des nicht-maskierbaren Interrupts sorgt Windows NT deshalb für einen HALT-Zustand mit Systemmeldung. Da der Betriebssystemkern von Windows NT bei Aufrufen des nicht-maskierbaren Interrupts immer diesen HALT-Zustand erwartet, verbietet sich dessen Nutzung zur Ausführung von Umgebungswechseln zum Echtzeitbetrieb von Steuerungsaufgaben. Schließlich wird bei dem aus DE 44 06 094 A1 bekannten Verfahren auch nur der Einsprung in das Betriebssystem mittels nicht-maskierbarem Interrupt festgelegt. Es ist jedoch kein definiertes Ende des in Echtzeit ausgeführten Steuerungsprogramms vorgesehen, so daß dem Betriebssystem bis zum nächsten Aufruf des Steuerungsprogramms gegebenfalls keine Zeit zur Ausführung bleibt.

Aus Elektronik, Bd. 42, Nr. 17, 24. August 1993, S. 95-100 ist ein Verfahren gemäß dem Oberbegriff des Anspruchs 1 und eine Vorrichtung gemäß dem Oberbegriff des Anspruchs 11 bekannt. In dieser Druckschrift wird die Möglichkeit einer Einbettung eines nicht-echtzeitfähigen Windows-Betriebssystems in ein echtzeitfähiges Betriebssystem beschrieben, wobei das nicht-echtzeitfähige Windows-Betriebssystem vom echtzeitfähigen Betriebssystem als eine Task behandelt wird und wobei zeitkritische Aufgaben vom echtzeitfähigen Betriebssystem abgearbeitet, zeitunkritische Aufgaben dagegen dem nicht-echtzeitfähigen Windows-Betriebssystem überlassen werden.

Aus IEEE Multimedia, Bd. 2, Nr. 1, 21. März 1995, S. 68 bis 84 sind weiterhin echtzeitfähige Betriebssysteme bekannt, die es ermöglichen, zeitkritische Multimedia-Aufgaben periodisch abzuarbeiten.

Aufgabe der Erfindung ist es deshalb, ein Verfahren und eine Vorrichtung zum Implementieren eines echtzeitfähigen Steuerprogramms in einem nicht-echtzeitfähigen Betriebsprogramm zu schaffen, die Echtzeitanwendungen unter dem nicht-echtzeitfähigen Betriebsprogramm ermöglichen, ohne die Stabilität des Betriebsprogramms zu gefährden.

Diese Aufgabe wird durch ein Verfahren gemäß Anspruch 1 und eine Vorrichtung gemäß Anspruch 11 gelöst. Bevorzugte Ausführungsformen sind in den abhängigen Ansprüchen angegeben.

Der erfindungsgemäße Lösungsansatz basiert auf einer deterministischen Zeitverteilung zwischen dem echtzeitfähigen Steuerprogramm und dem nicht-echtzeitfähigem Betriebsprogramm, d.h. das echtzeitfähige Steuerprogramm führt seine Aufgaben auf dem Prozessor des PCs zu Zeitpunkten aus, die von dem nicht-echtzeitfähigem Betriebssystem akzeptiert werden.

Um ein solches deterministisches Verhalten zu erreichen, werden gemäß der Erfindung pro Betriebszyklus des PC-Systems zwei Interrupts ausgelöst, wobei der eine Interrupt einen Umgebungswechsel von dem nicht-echtzeitfähigen Betriebssystem auf das echtzeitfähige Steuerprogramm und der andere Interrupt einen Umgebungswechsel von dem echtzeitfähigen Steuerprogramm auf das nicht-echtzeitfähige Betriebsprogramm ausführt, so daß in einem Betriebszyklus sowohl dem echtzeitfähigen Steuerprogramm als auch dem nicht-echtzeitfähigen Betriebsprogramm Laufzeiten zugeordnet sind. Die notwendigen Interrupt-Anforderungen zum Auslösen der Interruptroutinen werden dabei von einer internen Interrupt-Quelle des PC-Systems durchgeführt, wobei gemäß einer vorteilhaften Ausführungsform hierzu die Zeitgeber des PC-Systems, die die Systemtaktaufrufe bewirken, d.h. z.B. der Timer 0, herangezogen werden könnte.

Weiterhin ist gemäß der Erfindung der Betriebszyklus des PC-Systems durch Programmieren der Interrupt-Folge auf der internen Interrupt-Quelle frei einstellbar, wobei vorzugsweise eine Zykluszeit von 0,1 msec bis 1 msec gewählt wird, um für einen stabilen Programmablauf des echtzeitfähigen Steuerprogramms und des nicht-echtzeitfähigen Betriebsprogramms zu sorgen.

Darüber hinaus kann gemäß der Erfindung auch das Verhältnis zwischen der Laufzeit des echtzeitfähigen Steuerprogramms und der Laufzeit des nicht-echtzeitfähigen Betriebsprogramms verändert werden, wobei dem nicht-echtzeitfähigen Betriebsprogramm eine Mindestlaufzeit zugeordnet werden kann. Hierdurch läßt sich eine optimale Verteilung der Rechenkapazitäten des PC-Prozessors sowohl auf die Steueraufgaben als auch auf die normalen PC-Funktionen erreichen, wobei durch Sicherung einer Mindestlaufzeit des nicht-echtzeitfähigen Betriebssystems dessen Stabilität gewährleistet ist. Weiterhin kann auch während der Abarbeitung des echtzeitfähigen Steuerprogramms dieses Laufzeitverhältnis stufenlos modifiziert werden, um erforderliche Anpassungen des Echtzeitbetriebs, z.B. bei erhöhter "Echtzeit-Last", ausführen zu können.

Der erfindungsgemäße Lösungsansatz ermöglicht eine stabile Implementierung eines echtzeitfähigen Steuerprogramms in einem nicht-echtzeitfähigen Betriebsprogramm auf einem Prozessor, wobei insbesondere gewährleistet wird, daß zeitkritische Betriebssystemaufgaben, wie z.B. Netzwerk-, Hard-Disk- oder COM-Port-Aufgaben, ohne Unterbrechung sicher abgearbeitet werden. Weiterhin ist keine Zusatz-Hardware für das PC-System zum Ausführen der Steuerungsaufgaben notwendig, da die vom nicht-echtzeitfähigen Betriebssystem verwalteten PC-Ressourcen gleichzeitig zum Echtzeitbetrieb des Steuerprogramms genutzt werden können.

Um einen sicheren Echtzeitbetrieb ausführen zu können, sind gemäß einer bevorzugten Ausführungsform Sicherungsmaßnahmen gegen ungewünschte Umprogrammierungen, insbesondere der internen Interrupt-Quelle des PC-Systems, vorgesehen. Nach Einrichten des Betriebszyklus auf dem PC-System wird hierdurch ein Verändern der zeitlichen Abfolge der Interrupt-Aufrufe der internen Interrupt-Quelle bis zum Durchlaufende des echtzeitfähigen Steuerprogramms oder dessen externer Unterbrechung wirksam verhindert.

Unter dem Betriebssystem Windows NT tritt weiter das Problem auf, daß oft ein Neuanstoßen der Serviceroutine des Systemzeitgebers kurz nach deren regulären Anstoßen ausgelöst wird, um auftretende Systemlasten besser verteilen zu können. Gemäß der Erfindung wird ein solcher Neuanstoß identifiziert und ein unerwiinschter, vom Neuanstoß ausgelöster Aufruf des Echtzeitsteuerprogramms verhindert.

Die Erfindung ermöglicht nicht-echtzeitfähige Betriebssysteme auf offene und kompatible Weise mit Echtzeit-Eigenschaften auszustatten und somit einem PC verfügbar zu machen, der für alle Bereiche der Automatisierung ohne ein aufwendiges und zusätzliches Betriebssystem und Coprozessor-Karten die "harte Echtzeit" in leistungfähiger Weise beherrscht. Dies gilt insbesondere auch für die Standardbetriebssystem der Firma Microsoft und hier vor allem für das Betriebssystem Windows NT, das als Ausführungsbeispiel anhand der beigefügten Zeichnungen im folgenden näher erläutert wird.

In den Zeichnungen zeigen
Figur 1 einen Teil eines PC-Systems mit einem Zeitgebersystem und einem Interruptcontrollersystem in Blockschaltbild-Darstellung;
Figur 2 einen Teil des Interruptsystems des PC-Systems; und
Figur 3 ein Ablaufdiagramm zur Implementierung eines echtzeitfähigen Steuerprogramms in dem nicht-echtzeitfähigen Windows NT-Betriebsprogramm.

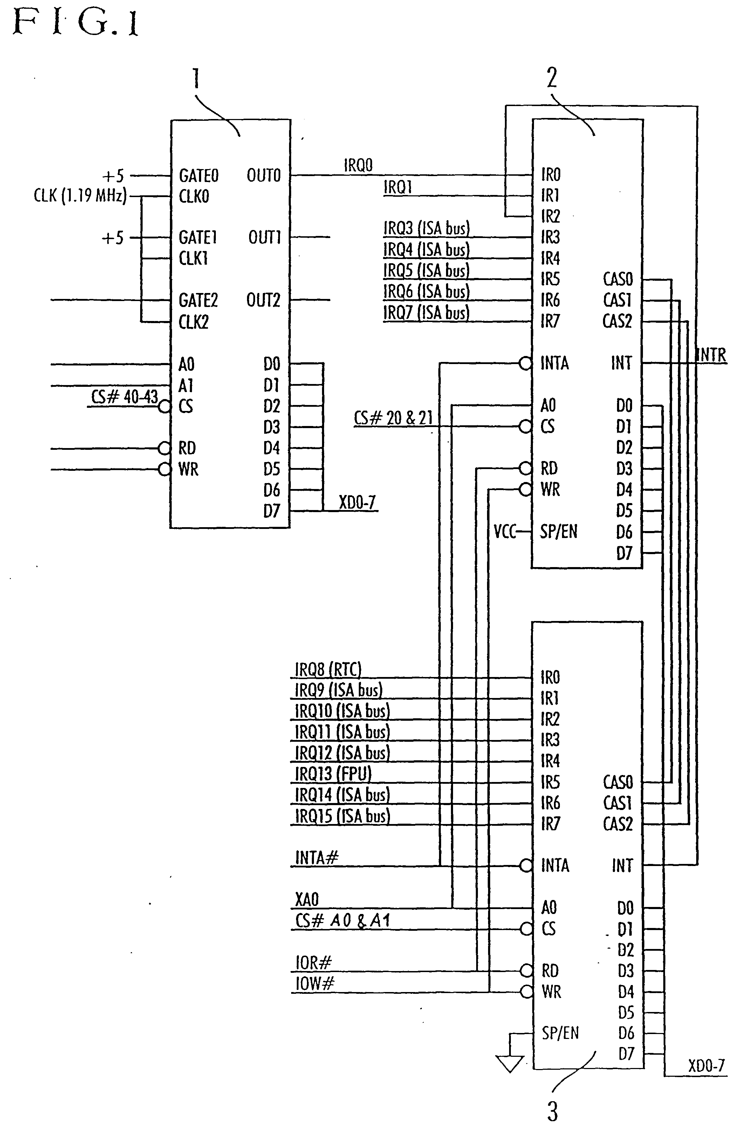

Wie in Figur 1 dargestellt, enthalten die Systemschaltkreise eines PC ein Zeitgebersystem 1 mit einem Timer 0 (OUTO) als Systemzeitgeber. Die von diesem Timer 0 über eine Interruptleitung IRQO abgegebenen Interrupt-Aufrufe werden einem üblicherweise aus zwei Interruptcontrollern bestehenden Interruptcontrollersystem 2, 3 zugeführt, das über eine Prozessorleitung INTR einen Interrupt im Prozessor auslöst.

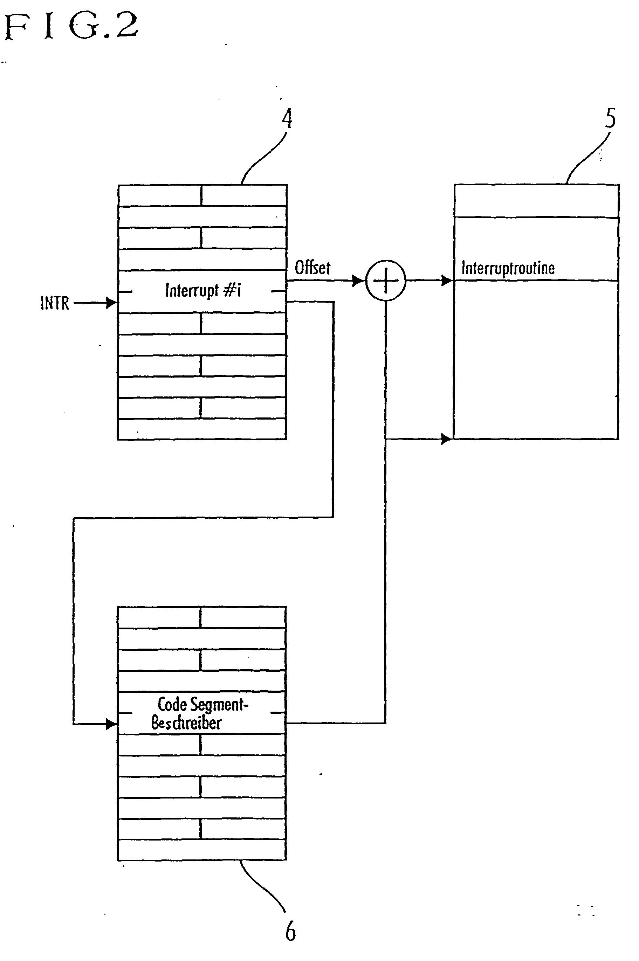

Der Prozessor zieht, wie in Figur 2 gezeigt ist, die im Interruptsignal enthaltene Interrupt-Nummer als Index in einer Interruptvektortabelle 4 heran und liest den entsprechenden Beschreiber, der einen Selektor und einen Offset enthält. Der Selektor dient als Zugriffsschlüssel auf einen Codesegment-Beschreiber in einer globalen oder lokalen Beschreibertabelle 5. Dadurch bringt der Prozessor das Codesegment in einem Speicher 6 in Erfahrung, das die Interruptroutine für das ausgelöste Interrupt enthält. Der Offset dient als Einsprungspunkt in dieses Codesegment und stellt die Startadresse der Interruptroutine dar. Bei einem Interrupt-Aufruf durch den Timer 0 wird unter dem Windows NT-Betriebssystem üblicherweise die Systemtaktroutine ausgelöst.

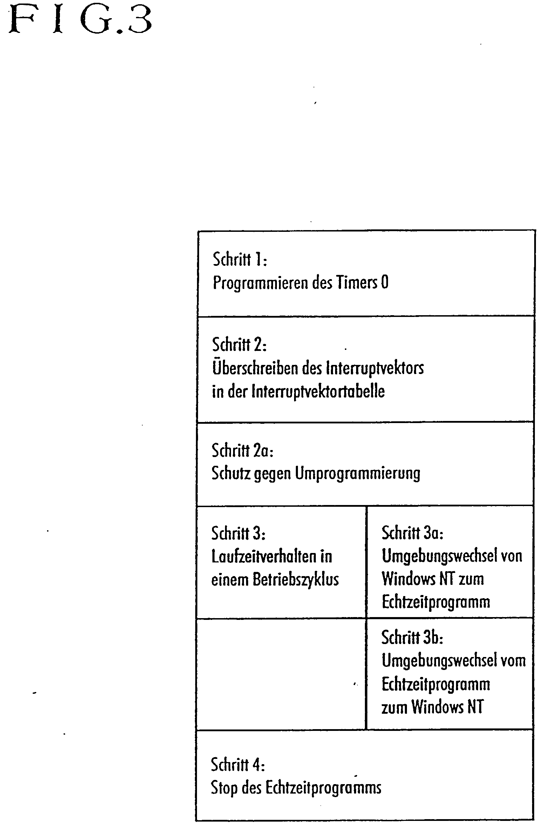

Gemäß der Erfindung wird nun, wie in Figur 3 gezeigt ist, in einem ersten Schritt (Schritt 1) der Timer 0 auf den gewünschten Betriebszyklus vorzugsweise im Bereich von 0,1 msec bis 1 msec über die Multimedia-Timer-Auflösung mit gleichen Aufrufen für Windows NT-Funktionen eingestellt. Der Timer 0 erzeugt vorhersehbare Interrupt-Aufrufe, die unter dem Interruptvektor INT30H in der Interruptvektortabelle 4 gespeichert sind. Dieser Interruptvektor wird gemäß der Erfindung überschrieben (Schritt 2), so daß er die Adresse der in dem Speicher 6 eingeschriebenen Implementierungsroutine anzeigt. Weiterhin werden bis zum Durchlauf oder der Unterbrechung des echtzeitfähigen Steuerprogramms Aufrufe des Windows NT-Betriebssystems zur Neuprogrammierung des Timers 0 unterdrückt (Schritt 2a).

Der den Betriebszyklus des PC-Systems festlegende Timer 0 gibt nach einer Umprogrammierung jeweils zwei Interrupt-Aufrufe pro Betriebszyklus ab. Die Zeitintervalle zwischen diesen beiden Interrupt-Aufrufen sind dabei frei einstellbar, so daß ein beliebiges Zeitverhältnis zwischen der Abfolge der Interrupt-Aufrufe in einem Betriebszyklus eingestellt werden kann. Die Implementierungsroutine löst beim ersten Interrupt-Aufruf immer einen Umgebungswechsel von dem Windows NT-Betriebssystem auf das echtzeitfähige Steuerprogramm (Schritt 3a) und beim zweiten Interrupt-Aufruf einen Umgebungswechsel von dem echtzeitfähigen Steuerprogramm auf das Windows NT-Betriebsprogramm (Schritt 3b) aus. Für den Umgebungswechsel von dem Steuerprogramm in das Windows NT-Betriebsprogramm wird dabei die Systemtaktroutine eingesetzt. Während der Abarbeitung des Steuerprogramms kann weiterhin das Zeitverhältnis zwischen den beiden Interrupt-Aufrufen des Timers 0 stufenlos verändert werden, wobei jedoch eine Mindestlaufzeit für das Windows NT-Betriebssystem abgesichert ist, um dessen Stabilität bei zeitkritischen Funktionen nicht zu gefährden.

Beim Windows NT-Betriebssystem besteht weiterhin im Zusammenhang mit dem Echtzeitbetrieb das Problem, daß das Betriebssystem nach einem regulären Aufruf der Serviceroutine des Timers 0 diese oft kurze Zeit später nochmals aufruft, um eine bessere Systemlastverteilung erzielen zu können. Gemäß der Erfindung werden diese Neuaufrufe durch das Windows NT-Betriebssystem identifiziert und ein unerwünschtes Auslösen des Echtzeitsteuerprogramms verhindert.

Nach dem Abarbeiten des Steuerprogramms bzw. bei dessen Unterbrechung wird der ursprüngliche Interruptvektor INT30H in die Interruptvektortabelle 4 zurückgeschrieben, so daß wieder auf die Systemtaktroutine des Windows NT-Betriebssystems bei Timer 0-Interrupts gezeigt wird. Weiterhin wird die Blockade der Neuprogrammierung des Timers 0 aufgehoben, wodurch das Windows NT-Betriebssystem sein ursprüngliches Verhalten vor der Implementierung des Echtzeitsteuerprogramms wiederherstellen kann (Schritt 4).

Die Erfindung ermöglicht also eine deterministische Zeitverteilung zwischen dem Echtzeitsteuerprogramm und dem Windows NT-Betriebsprogramm, die synchron zum Systemtakt verläuft. Durch die Erfindung ist es möglich, alle Arten von Steuerungsprogrammen unter dem Windows NT-Betriebsprogramm zu implementieren, ohne die Eigenschaften dieses Programms zu verändern.

Die Erfindung läßt sich jedoch nicht nur bei dem Windows NT-Betriebsprogramm anwenden, sondern ist auch für alle weiteren nicht-echtzeitfähigen Betriebsprogramme geeignet.

## Patentansprüche

1. Verfahren zum Implementieren eines echtzeitfähigen Steuerprogramms in einem nicht-echtzeitfähigen Betriebsprogramm auf einem Prozessor eines PC-Systems,
**dadurch gekennzeichnet,** daß
durch einen ersten Interrupt-Aufruf einer internen Interrupt-Quelle in einem Betriebszyklus ein Umgebungswechsel von dem nicht-echtzeitfähigen Betriebsprogramm auf das echtzeitfähige Steuerprogramm ausgeführt wird, um dem echtzeitfähigen Steuerprogramm in dem Betriebszyklus eine feste Laufzeit zuzuordnen, und
durch einen zweiten Interrupt-Aufruf der Interrupt-Quelle in dem Betriebszyklus ein Umgebungswechsel von dem echtzeitfähigen Steuerprogramm auf das nicht-echtzeitfähige Betriebsprogramm ausgeführt wird, um dem nicht-echtzeitfähigen Betriebsprogramm in dem Betriebszyklus eine feste Laufzeit zuzuordnen.

2. Verfahren gemäß Anspruch 1, **dadurch gekennzeichnet,** daß der Betriebszyklus vorzugsweise zwischen 0,1 msec und 1 msec frei einstellbar ist.

3. Verfahren gemäß einem der Ansprüche 1 oder 2, **dadurch gekennzeichnet,** daß das Verhältnis zwischen der Laufzeit des echtzeitfähigen Steuerprogramms und der Laufzeit des nicht-echtzeitfähigen Betriebsprogramms frei einstellbar ist.

4. Verfahren gemäß Anspruch 3, **dadurch gekennzeichnet,** daß dem nicht-echtzeitfähigen Betriebsprogramm eine Mindestlaufzeit eingeräumt wird.

5. Verfahren gemäß einem der Ansprüche 1 bis 4, **dadurch gekennzeichnet,** daß die interne Interrupt-Quelle ein Zeitgeber des PC-Systems ist, der mittels der Interrupt-Aufrufe den Systemtakt festlegt.

6. Verfahren gemäß Anspruch 5, **dadurch gekennzeichnet,** daß ein Anstoß der Serviceroutine des Zeitgebers durch das nicht-echtzeitfähige Betriebssystem zum Auslösen eines Interrupt-Aufrufes für den Systemtakt identifiziert und das Auslösen des echtzeitfähigen Steuerprogramms verhindert wird.

7. Verfahren gemäß Anspruch 5 oder 6, **dadurch gekennzeichnet**, daß der Betriebszyklus durch Festlegen der Interrupt-Aufruffolge des Zeitgebers eingestellt wird.

8. Verfahren gemäß einem der Ansprüche 5 bis 7, **dadurch gekennzeichnet,** daß der Zeitgeber mit zwei alternierenden Zeitintervallen zum Auslösen aufeinanderfolgender Interrupt-Aufrufe eingestellt wird, die das Verhältnis zwischen der Laufzeit des echtzeitfähigen Steuerprogramms und der Laufzeit des nicht-echtzeitfähigen Betriebsprogramms festlegen.

9. Verfahren gemäß einem der Ansprüche 1 bis 8, **dadurch gekennzeichnet,** daß nach dem Einrichten des Betriebszyklus auf dem PC-System mit einem Umgebungswechsel von dem nicht-echtzeitfähigen Betriebsprogramm auf das echtzeitfähige Steuerprogramm und einem Umgebungswechsel von dem echtzeitfähigen Steuerprogramm auf das nicht-echtzeitfähige Betriebsprogramm ein Verändern der Interrupt-Aufrufe der zugehörigen internen Interrupt-Quelle blockiert wird, bis das echtzeitfähige Steuerprogramm abgearbeitet ist oder unterbrochen wird.

10. Verfahren gemäß einem der Ansprüche 1 bis 9, **gekennzeichnet** durch die Verfahrensschritte
Festlegen der Zeitintervalle zwischen den Interrupt-Aufrufen des Zeitgebers,
Überschreiben des zum Interrupt-Aufruf des Zeitgebers gehörenden, die Systemtaktroutine adressierenden Interrupt-Vektors mit einem eine Implementierungsroutine adressierenden Interruptvektors,
Sichern der Zeitinterval-Festlegung des Zeitgebers gegen Umprogrammierung durch das nicht-echtzeitfähige Betriebsprogramm, und
Abarbeiten des echtzeitfähigen Steuerprogramms entsprechend den Interrupt-Aufrufen des Zeitgebers bei alternierendem Auslösen des echtzeitfähigen Steuerprogramms und der Systemtaktroutine des nicht-echtzeitfähigen Betriebsprogramms durch die Implementierungsroutine.

11. Vorrichtung zum Implementieren eines echtzeitfähigen Steuerprogramms in einem nicht-echtzeitfähigen Betriebsprogramm auf einem Prozessor eines PC-Systems mit einer internen Interrupt-Quelle (1),
**gekennzeichnet durch** eine mit der Interrupt-Quelle (1) verbundene Interrupteinrichtung (4, 5, 6) die ausgelegt ist, einen ersten Umgebungswechsel von dem nicht-echtzeitfähigen Betriebsprogramm auf das echtzeitfähige Steuerprogramm in einem Betriebszyklus des PC-Systems analog zu einem ersten Interrupt-Aufruf der internen Interrupt-Quelle durchzuführen, so daß dem echtzeitfähigen Steuerprogramm in dem Betriebszyklus eine feste Laufzeit zugeordnet ist, und einen zweiten Umgebungswechsel von dem echtzeitfähigen Steuerprogramm auf das nicht-echtzeitfähige Betriebsprogramm in dem Betriebszyklus des PC-Systems analog zu einem zweiten Interrupt-Aufruf der internen Interrupt-Quelle durchzuführen, so daß dem nicht-echtzeitfähigen Betriebsprogramm in dem Betriebszyklus eine feste Laufzeit zugeordnet ist.

12. Vorrichtung gemäß Anspruch 11, **dadurch gekennzeichnet,** daß die interne Interrupt-Quelle (1) ein Zeitgeber des PC-Systems ist, der mittels der Interrupt-Aufrufe den Systemtakt festlegt.

13. Vorrichtung gemäß Anspruch 12, **dadurch gekennzeichnet,** daß der Zeitgeber programmierbar ist, und eine Einrichtung zum Festlegen der Zeitintervalle zwischen den Interrupt-Aufrufen des Zeitgebers vorgesehen ist.

## Claims

1. A method for implementing a real time control program in a non-real time operating program on a processor of a PC system,
characterized in that
a change of environment from the non-real time operating program to the real time control program is carried out by means of a first interrupt call of an internal interrupt source in an operating cycle, whereby a defined run time is allocated to the real time control program in the operating cycle, and that
a change of environment from the real time control program to the non-real time operating program is carried out by means of a second interrupt call of the internal interrupt source, whereby a defined run time is allocated to the non-real time operating program in the operating cycle.

2. The method according to claim 1 characterized in that the operating cycle is freely adjustable, preferably in a range of 0.1 mesc to 1 msec.

3. The method according to claim 1 or 2, characterized in that ratio between the run time of the real time control program and the run time of the non-real time operating program is freely adjustable.

4. The method according to claim 3, characterized in that the non-real time operating program is provided with a minimum run time.

5. The method according to any of claims 1 to 4, characterized in that the internal interrupt source is a timer of the PC system, which sets the system clock by means of interrupt calls.

6. The method according to claim 5, characterized in that triggering of the service routine of the timer caused by the non-real time operating program to initiate an interrupt call for the system clock is identified and the start of the real time control program is prevented.

7. A method according to claim 5 or 6, characterized in that the operating cycle is set by the definition of the order of interrupts of the timer.

8. The method according to any of claims 5 to 7, characterized in that the timer is set by two alternating time intervals for triggering successive interrupt calls, said time intervals determining the ratio between the run time of a real time control program and the run time of a non-real time operating system.

9. The method according to any of claim 1 to 8,
characterized in that after installation of the operating cycle of a PC system including a change of environment from the non-real time operating program to the real time control program and a change of environment from the real time control program to the non-real time operating system, a change of interrupt calls of the corresponding internal interrupt source is prevented until the real time control program is ended or stopped.

10. The method according to any of claims 1 to 9,
characterized by the steps of
determining the time intervals between the interrupt calls of the timer;
overwriting the interrupt vector corresponding to the interrupt call of the timer and addressing the system clock routine with an interrupt vector addressing the implementing routine;
protecting the definition of the time intervals of the timer against reprogramming by the non-real time operating program, and
processing, in accordance with the interrupt calls of the timer, the real time control program including alternate triggering of the real time control program and of the system clock routine of a non-real time operating program by means of the implementing routine.

11. An apparatus for implementing a real time control program on a non-real time operating program on a processor of a PC system comprising an internal interrupt source (1);
characterized by
interrupt means (4, 5, 6) connected to the internal interrupt source (1), being suitable for performing a first change of environment from the non-real time operating program to the real time control program in an operating cycle of the PC system in accordance to a first interrupt call of the internal interrupt source, whereby a defined run time is allocated to the real time operating program in the operating cycle, and for performing a second change of environment from the real time control program to the non-real time program operating program in the operating cycle of the PC system in accordance with a second interrupt call of the internal interrupt source, whereby a defined run time is allocated to the non-real time operating program in the operating cycle.

12. The apparatus according to claim 11, characterized in that the internal interrupt source (1) is a timer of the PC system which determines the system clock by means of interrupt calls.

13. The apparatus according to claim 12, characterized in that the timer is programmable and means for setting the time intervals between the interrupt calls of the timer are provided.

## Revendications

1. Procédé pour mettre en oeuvre un programme de commande en temps réel dans un programme d'exploitation en temps non réel sur un processeur d'un système de PC,
caractérisé en ce que,
au cours d'un cycle d'exploitation, un changement d'environnement du programme d'exploitation en temps non réel au profit du programme de commande en temps réel est réalisé par l'intermédiaire d'un premier appel d'interruption d'une source interne d'interruption afin d'affecter au programme de commande en temps réel un temps d'exécution au cours du cycle d'exploitation et
au cours du cycle d'exploitation, un changement d'environnement du programme de commande en temps réel au profit du programme d'exploitation en temps non réel est réalisé par l'intermédiaire d'un second appel d'interruption de la source interne d'interruption afin d'affecter au programme d'exploitation en temps non réel un temps d'exécution fixe au cours du cycle d'exploitation

2. Procédé selon la revendication 1, caractérisé en ce que la durée du cycle d'exploitation peut être réglée librement, de préférence, entre 0,1 msec et 1 msec.

3. Procédé selon l'une des revendications 1 ou 2, caractérisé en ce que le rapport entre le temps d'exécution du programme de commande en temps réel et le temps d'exécution du programme d'exploitation en temps non réel peut être réglé librement.

4. Procédé selon la revendication 3, caractérisé en ce qu'un temps d'exécution minimal est attribué au programme d'exploitation en temps non réel.

5. Procédé selon l'une des revendications 1 à 4, caractérisé en ce que la source interne d'interruption est un générateur d'horloge du système de PC qui, au moyen des appels d'interruption, définit la cadence du système.

6. Procédé selon la revendication 5, caractérisé en ce qu'un déclenchement du programme de service du générateur d'horloge est identifié par le système d'exploitation en temps non réel pour lancer un appel d'interruption de la cadence du système, et le lancement du programme de commande en temps réel est bloqué.

7. Procédé selon la revendication 5 ou 6, caractérisé en ce que le cycle d'exploitation est réglé en définissant la séquence des appels d'interruption du générateur d'horloge.

8. Procédé selon l'une des revendications 5 à 7, caractérisé en ce que le générateur d'horloge est réglé avec deux intervalles de temps alternés pour lancer des appels d'interruption successifs qui définissent le rapport entre le temps d'exécution du programme de commande en temps réel et le temps d'exécution du programme d'exploitation en temps non réel.

9. Procédé selon l'une des revendications 1 à 8, caractérisé en ce qu'après avoir organisé le cycle d'exploitation sur le système de PC avec un changement d'environnement du programme d'exploitation en temps non réel au profit du programme de commande en temps réel et avec un changement d'environnement du programme de commande en temps réel au profit du programme d'exploitation en temps non réel, une modification des appels d'interruption de la source interne d'interruption correspondante est interdite jusqu'à ce que le programme de commande en temps réel soit exécuté ou interrompu.

10. Procédé selon l'une des revendications 1 à 9, caractérisé par les étapes de procédé consistant à
définir les intervalles de temps entre les appels d'interruption du générateur d'horloge,
substituer au vecteur d'interruption appartenant à l'appel d'interruption du générateur d'horloge et adressant le programme de cadence du système un vecteur d'interruption adressant un programme de mise en oeuvre,
protéger le mode de définition de l'intervalle de temps du générateur d'horloge contre une reprogrammation par le programme d'exploitation en temps non réel, et
exécuter le programme de commande en temps réel selon les appels d'interruption du générateur d'horloge lors du lancement alterné du programme de commande en temps réel et du programme de cadence de système du programme d'exploitation en temps non réel par le programme de mise en oeuvre.

11. Dispositif pour mettre en oeuvre un programme de commande en temps réel dans un programme d'exploitation en temps non réel sur un processeur d'un système de PC avec une source interne d'interruption (1),
caractérisé par un dispositif d'interruption (4, 5, 6) qui est connecté à la source d'interruption (1) et qui est conçu pour réaliser un premier changement d'environnement du programme d'exploitation en temps non réel au profit du programme de commande en temps réel lors d'un cycle d'exploitation du système de PC conformément à un premier appel d'interruption de la source interne d'interruption, afin d'affecter au programme de commande en temps réel, lors du cycle d'exploitation, un temps d'exécution fixe, et pour réaliser un second changement d'environnement du programme de commande en temps réel au profit du programme d'exploitation en temps non réel lors du cycle d'exploitation du système de PC conformément à un second appel d'interruption de la source interne d'interruption, afin d'affecter au programme d'exploitation en temps non réel, lors du cycle d'exploitation, un temps d'exécution fixe.

12. Dispositif selon la revendication 11, caractérisé en ce que la source interne d'interruption (1) est un générateur d'horloge du système de PC qui, au moyen des appels d'interruption, définit la cadence du système.

13. Dispositif selon la revendication 12, caractérisé en ce que le générateur d'horloge est programmable, et un dispositif est prévu pour définir les intervalles de temps entre les appels d'interruption du générateur d'horloge.
